**Europäisches Patentamt**

**European Patent Office**

**Office européen des brevets**

(19)

(11) Numéro de publication: **0 058 590**
**A1**

## (12) DEMANDE DE BREVET EUROPEEN

(21) Numéro de dépôt: **82400153.1**

(22) Date de dépôt: **28.01.82**

(51) Int. Cl.³: **B 60 R 25/02**

(30) Priorité: **06.02.81 ES 256034 U**
**05.08.81 FR 8115159**

(43) Date de publication de la demande:
**25.08.82 Bulletin 82/34**

(84) Etats contractants désignés:
**AT BE CH DE GB IT LI NL SE**

(71) Demandeur: **Diaz, Ingacio**
**22, Avénida Réplublica Argentina**
**Seville(ES)**

(72) Inventeur: **Diaz, Ingacio**
**22, Avénida Réplublica Argentina**
**Seville(ES)**

(74) Mandataire: **Jolly, Jean-Pierre et al,**
**Cabinet BROT 83, rue d'Amsterdam**
**F-75008 Paris(FR)**

(54) **Antivol perfectionné pour automobile.**

(57) Dans l'antivol selon l'invention, la barre de direction est constituée par une barre primaire 1 sur laquelle est monté le volant et une barre secondaire 10 reliée au système de direction, ces deux barres 1, 10 étant disposées bout à bout, et présentant des extrémités adjacentes cannelées. Sur ces extrémités coulisse un cylindre d'assemblage 7 à surface interne cannelée et dont les déplacements axiaux sont obtenus à partir du mouvement de rotation d'une clé au moyen d'un système bielle 19 excentrique 18.

L'invention s'applique notamment aux automobiles.

EP 0 058 590 A1

./...

Croydon Printing Company Ltd.

Fig.1

Antivol perfectionné pour automobile.

La présente invention concerne un antivol perfectionné pour automobile.

A l'heure actuelle on a déjà réalisé une pluralité de systèmes mécaniques, électriques, électroniques, faisant office d'antivols, toutefois aucun de ceux-ci n'a permis d'obtenir des résultats entièrement satisfaisants, c'est d'ailleurs ce qui explique le nombre important de vols d'automobile.

L'invention a donc pour but de combler cette grande lacune. Elle propose donc un antivol qui, grâce à ses caractéristiques originales, convient parfaitement et répond aux normes en vigueur relatives aux homologations.

Cet antivol présente une double caractéristique :

- En premier lieu, il se comporte comme un antivol classique en ce sens qu'il bloque le mécanisme de commande de la direction du véhicule, dans une série de positions (par exemple huit) sur un tour complèt du volant (au lieu de deux dans un antivol classique).

- En deuxième lieu, en position bloquée du mécanisme de direction, il laisse le volant complètement libre en rotation, de sorte qu'il ne sert à rien de tenter de le forcer étant donné qu'il tourne librement.

Un autre avantage de l'antivol selon l'invention consiste en ce que le mécanisme est dépourvu d'engrenages et transforme le mouvement circulaire imprimé par la clé en un mouvement rectiligne, au moyen d'un système bielle manivelle dans lequel la position antivol est obtenue en un point mort de la bielle. De ce fait, on obtient une irréversibilité du système rendant inopé-rantes toutes manipulation étrangères ou fortuites.

D'une façon plus précise, l'antivol selon l'invention fait intervenir une barre de direction réalisée en deux tronçons coaxiaux disposés bout à bout, à savoir, une barre primaire sur laquelle est monté le volant et une barre secondaire reliée au mécanisme

de commande de la direction. L'entraînement en rotation de la barre secondaire à partir de la barre primaire s'effectue alors au moyen d'une liaison débrayable faisant intervenir un cylindre d'assemblage monté axialement coulissant sur les extrémités adjacentes des deux-dites barres, la surface interne de ce cylindre d'assemblage et la surface externe des extrémités adjacentes desdites barres étant conformées de manière à permettre de solidariser en rotation le cylindre d'assemblage sur l'une et ou l'autre barre tout en permettant son coulissement axial sur celles-ci.

Par ailleurs en vue d'assurer le blocage en rotation de la barre secondaire en position "antivol" le cylindre d'assemblage présente à l'une de ses extrémités (de préférence du côté de la barre secondaire) une conformation permettant un accouplement du type à crabotage avec une forme correspondante de la structure fixe supportant l'antivol.

Les déplacements axiaux du cylindre d'assemblage sont obtenus à partir du mouvement de rotation d'une clé, au moyen d'un système comprenant un excentrique et une bielle qui entraîne une fourchette menante en prise avec une gorge circulaire ménagée dans le cylindre d'assemblage.

Dans cette gorge est également montée une fourchette menée entraînant le contact mobile d'un interrupteur commandant le circuit électrique et le circuit de démarrage du véhicule.

Ainsi grâce au dispositions précedemment décrites ;

En position antivol on obtient, la mise en roue libre du volant, le blocage en rotation de la barre secondaire et en conséquence de la direction, ainsi que la rupture du circuit électrique et du circuit de démarrage du véhicule.

En position marche obtenue par la rotation de la clé, on obtient l'enbrayage des barres primaire et secondaire autorisant la commande de la direction par le volant et la fermeture du circuit électrique. Une position extrême est en outre prévue pour provoquer la fermeture temporaire du circuit de démarrage du moteur à l'image des systèmes classiques actuellement utilisés.

D'une façon plus précise, l'ensemble de tout le mécanisme se divise en deux sous-ensembles appelés d'action et de manipulation, que l'on va décrire avec leurs composants et leurs fonctions respectives.

Le sous-ensemble d'action loge les barres primaire et secondaire avec leurs butées et coussinets respectifs, la bague d'assemblage avec les fourchettes menante et menée. Dans la barre primaire se monte le système de retour pour le démarrage électrique, composé d'une rondelle, d'un ressort et d'un anneau pour limiter la course de la bague au moment du démarrage et du retour de la clé. Entre les extrémités adjacentes des barres se place une rondelle supportée par un pivot inséré dans les deux barres. Cette rondelle, à la façon d'un palier de butée, sert à supporter la rotation et les pressions auxquelles le volant est soumis, essentiellement quand il se trouve en état de rotation libre. Tout cet ensemble se loge dans un corps enveloppant, consistant en un tube convenablement usiné.

Le sous-ensemble de manipulation est celui qui reçoit directement l'effort du conducteur pour le transmettre au sous-ensemble d'action. Ce sous-ensemble forme bloc ou est solidarisé avec celui d'action au moyen de sa structure qui se présente sous la forme de deux demi-colliers dont l'un est solidaire d'un tube qui porte intérieurement tout le mécanisme de serrure et de transmission. Entre la serrure et l'une des pièces intermédiaires se monte un ressort destiné à appliquer une tension à la serrure dans le sens qui tend à l'extraire de son logement.

Dans le demi-collier opposé se montent les composants du système de commutation électrique du contact et du démarrage du moteur ainsi que les logements des têtes des vis qui servent à assembler les deux demi-colliers entre eux ainsi qu'à l'enveloppe principale. Le système électrique de commutation est actionné par la tige de la fourchette menée et on peut le monter à son emplacement ou l'en démonter sans devoir manipuler le mécanisme antivol ni le démonter de son emplacement comme c'est le cas des antivols classiques. La caractéristique originale de ce système de commutation consiste en ce que son mouvement est rectiligne.

Un mode de réalisation de l'invention sera décrit ci-après, à titre d'exemple non limitatif avec référence aux dessins annexés dans lesquels :

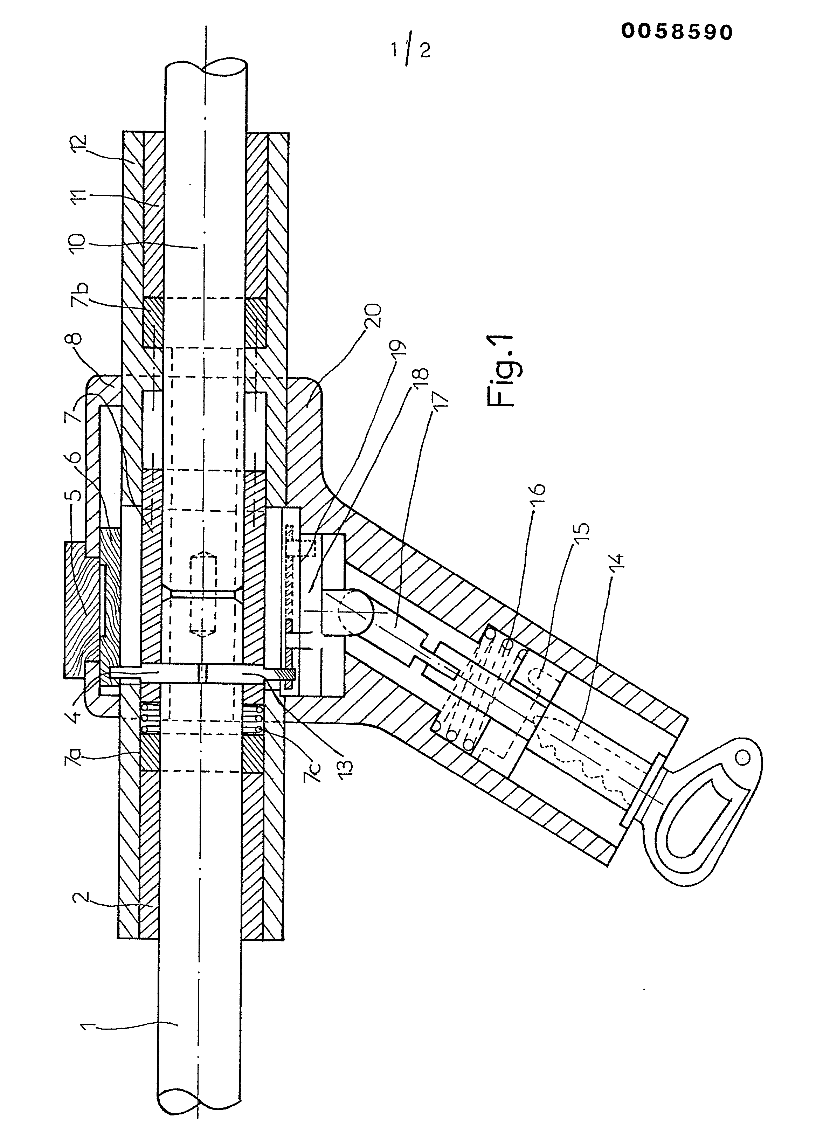

- La figure 1 est une coupe axiale d'un dispositif antivol selon l'invention,

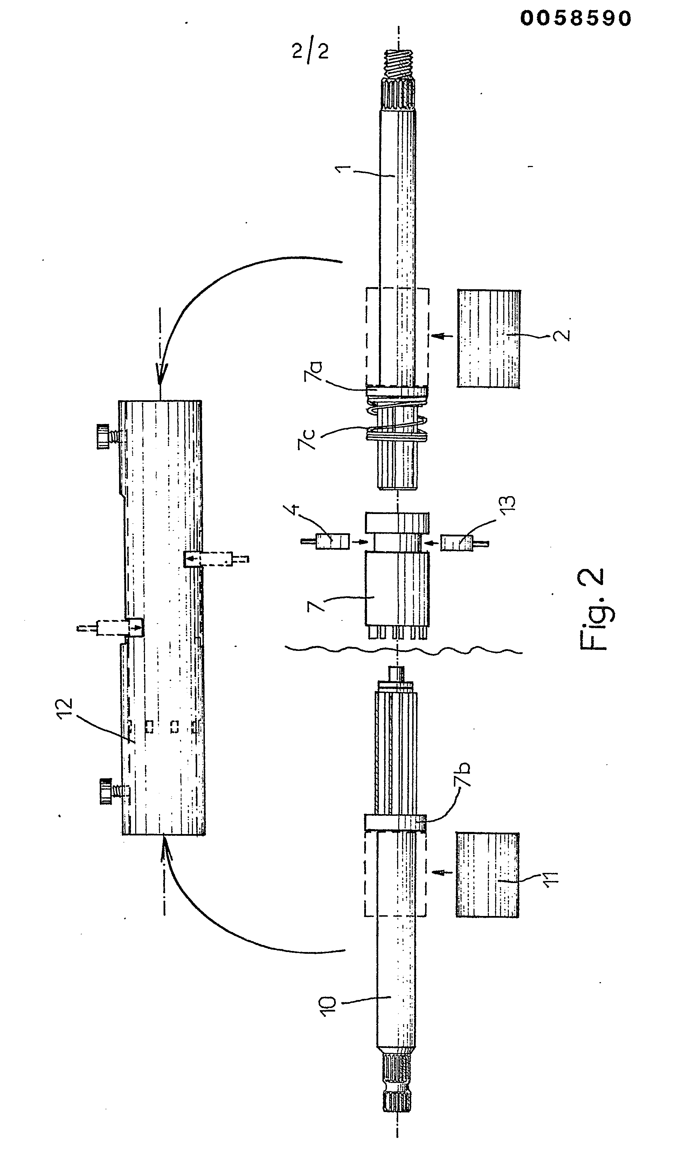

- La figure 2 est une perspective éclatée du sous-ensemble d'action de l'antivol représenté figure 1.

Sur ces dessins, la barre de direction est formée de deux tronçons coaxiaux une barre primaire 1 et une barre secondaire 10 disposés bout à bout et montés rotatifs dans un corps 12, par l'intermédiaire de coussinets (un coussinet 2 pour la barre primaire 1 et un coussinet 11 pour la barre secondaire 10).

L'entraînement en rotation de la barre secondaire 10, à partir de la barre primaire 1, sur laquelle est monté le volant, s'effectue au moyen d'une liaison débrayable, faisant intervenir des cannelures réalisées sur les deux extrémités adjacentes des deux barres 1, 10 et un cylindre d'assemblage 7, présentant une face interne canelée, et qui est destiné à venir coulisser axialement sur les deux dites extrémités entre deux butées 7a, 7b dont l'une est équipée d'un ressort 7c.

La position embrayée est obtenue lorsque le cylindre d'assemblage 7 est en prise à la fois sur les deux barres 1 et 10, tandisque la position débrayée est obtenue lorsque le cylindre n'est en prise que sur la barre secondaire 10.

Le cylindre d'assemblage 7 est muni d'une gorge circulaire dans laquelle s'engage une fourchette menante 13 dont les déplacements rectilignes (parallèle à l'axe des barres 1, 10) sont assurés, à partir des mouvements de rotation d'une clé, au moyen d'un système comprenant un excentrique 18 et d'une bielle 19.

L'entraînement de l'excentrique à partir de la serrure 14 qui peut comprendre de façon classique un levier de sureté 15 et un ressort de sureté 16, s'effectue par l'intermédiaire d'un moufle (17 renvoi d'angle).

Le corps de cette serrure est monté sur le corps 12 au moyen d'un demi-collier porte-serrure 20 qui coopère avec un demi-collier porte contact renfermant un interrupteur linéaire qui comprend :

- un contact fixe monté sur le demi-collier 8,

- un contact mobile entraîné par une fourchette menée en prise avec la gorge annulaire du cylindre d'assemblage 8.

Par ailleurs le cylindre d'assemblage 7 comprend à l'une de ses extrémités un système de crantage par exemple en forme de créneau destiné à venir s'engager en position antivol, à la façon de tenons dans des crantages correspondants réalisés dans le corps 12 au niveau de la butée 7b. Cette disposition permet d'assurer le blocage en rotation de la barre secondaire 10 par l'intermédiaire du cylindre d'assemblage 7, en position "antivol".

REVENDICATIONS

1.- Antivol à débrayage du volant pour véhicule automobile, caractérisé en ce que la barre de direction est formée de deux tronçons, à savoir, une barre primaire (1) sur laquelle est monté le volant et une barre secondaire (10) reliée au système de direction ces deux barres (1,10) étant disposées bout à bout et en ce que l'entraînement de la barre secondaire (10) à partir de la barre principale s'effectue au moyen d'une liaison débrayable faisant intervenir une conformation appropriée des extrémités adjacentes des deux barres (1,10) et un cylindre d'assemblage (7) présentant une surface interne conformée de manière à ce que ce cylindre (7) soit solidaire en rotation de l'une et/ou de l'autre de ces extrémités tout en pouvant librement coulisser sur celles-ci, les déplacements axiaux dudit cylindre d'assemblage 7, étant obtenus à partir du mouvement de rotation d'une clé au moyen d'un système comprenant un excentrique (18) et une bielle (19).

2.- Antivol selon la revendication 1, caractérisé en ce que le cylindre d'assemblage (7) présente à l'une de ses extrémités une conformation destinée à venir s'accoupler en position "antivol" avec une forme correspondante de la structure fixe de l'antivol, de manière à assurer un blocage en rotation de la barre secondaire.

3.- Antivol selon l'une des revendication 1 et 2, caractérisé en ce qu'il comprend un interrupteur comprenant un contact fixe (5) et un contact mobile (6) entraîné par le cylindre d'assemblage (7).

4.- Antivol selon l'une des revendications précédentes, caractérisé en ce que la susdite bielle entraîne une fourchette menante en prise avec une gorge ménagée dans le cylindre d'assemblage (7).

5.- Antivol selon l'une des revendications précédentes, caractérisé en ce que le susdit contact mobile (6) est entraîné par une fourchette menée (4) venant en prise avec la susdite gorge du cylindre d'assemblage (7).

6.- Antivol selon l'une des revendications précédentes, caractérisé en ce qu'il comprend un mécanisme de serrure entraînant le susdit excentrique (18) par l'intermédiaire d'un renvoi d'angle tel qu'un moufle (17).

7.- Antivol selon l'une des revendications précédentes, caractérisé en ce que le mécanisme de serrure est logé dans un demi-collier (20) qui coopère avec un demi-collier (8) renfermant le susdit interrupteur (5,6).

8.- Antivol selon l'une des revendications précédentes, caractérisé en ce que le mouvement de coulissement du cylindre d'assemblage (7) est limité par deux butées (7a,7b) dont l'une est équipée d'un ressort (7c).

0058590

Fig.1

Fig. 2

0058590

Numéro de la demande

EP 82 40 0153

**Office européen des brevets**

## RAPPORT DE RECHERCHE EUROPEENNE

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| X | FR - A - 2 432 408 (BACH)  * en entier * | 1,3,4, 6,8 | B 60 R 25/02 |
| A | FR - A - 761 748 (FOX)  * en entier * | 1,3 | |

**DOMAINES TECHNIQUES RECHERCHES (Int. Cl. ³)**

B 60 R

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X | Le présent rapport de recherche a été établi pour toutes les revendications | |
|---|---|---|
| Lieu de la recherche La Haye | Date d'achèvement de la recherche 06-05-1982 | Examinateur HEROUAN |

OEB Form 1503.1   06.78